# EUROPÄISCHE PATENTANMELDUNG

(11) **EP 4 147 813 A1**
(43) Veröffentlichungstag der Anmeldung: **15.03.2023**
(21) Anmeldenummer: 22189171.6
(22) Anmeldetag: 08.08.2022
(51) Int. Cl.: B23K 9/028, B23K 26/242, B23K 26/244, B23K 26/28, B23K 33/00, F01N 13/00, F16L 41/00, B23K 101/00

(54) **SCHWEISSBAUTEIL UND VERFAHREN ZUM VERSCHWEISSEN EINES DERARTIGEN SCHWEISSBAUTEILS MIT EINEM BAUTEIL**

(30) Priorität: 08.09.2021 DE 102021123190
(71) Anmelder: Purem GmbH, 66539 Neunkirchen (DE)
(72) Erfinder: Jambrosic, Kresimir, Reichenbach (DE); Gotthard, Christoph, Esslingen (DE); Korb, Hagen, Aichwald (DE)
(74) Vertreter: Ruttensperger Lachnit Trossin Gomoll

(57) **Zusammenfassung**

An einem Schweißbauteil (22) zum Verschweißen mit einem Bauteil (28) vermittels wenigstens eines Schweißbereichs (30) ist wenigstens eine Schweißindikatoranordnung (40) vorgesehen, wobei die wenigstens eine Schweißindikatoranordnung (40) einen durch den wenigstens einen Schweißbereich (30) zu überdeckenden Schweißbereich-Minimumindikator und einen durch den wenigstens einen Schweißbereich (30) nicht zu überdeckenden Schweißbereich-Maximumindikator umfasst.

## Beschreibung

Die vorliegende Erfindung betrifft ein Schweißbauteil, welches vermittels wenigstens eines Schweißbereichs an einem Bauteil festgelegt wird.

Beispielsweise bei der Herstellung von Abgasanlagen für Brennkraftmaschinen ist es bekannt, als Schweißbauteile zu betrachtende Stutzen zur Aufnahme von Sensoren an als Bauteile zu betrachtenden Abgasführungskomponenten, beispielsweise Rohre oder Gehäuse, durch Verschweißen festzulegen. Dazu wird eine derartige in Anlage an einem Rohr oder einem Gehäuse positioniert und durch eine den Verbund zwischen Stutzen und Rohr bzw. Gehäuse herstellende, im Allgemeinen vollständig um die Stutzen umlaufende Schweißnaht fixiert.

Es ist die Aufgabe der vorliegenden Erfindung, ein Schweißbauteil sowie ein Verfahren zum Verschweißen eines derartigen Schweißbauteils mit einem Bauteil vorzusehen, mit welchen mit einfachen Maßnahmen die Möglichkeit geschaffen wird, eine korrekte Ausgestaltung eines einen festen Verbund zwischen Schweißbauteil und Bauteil herstellenden Schweißbereichs zu überprüfen.

Gemäß einem ersten Aspekt der vorliegenden Erfindung wird diese Aufgabe gelöst durch ein Schweißbauteil zum Verschweißen mit einem Bauteil vermittels wenigstens eines Schweißbereichs, wobei an dem Schweißbauteil wenigstens eine Schweißindikatoranordnung vorgesehen ist, wobei die wenigstens eine Schweißindikatoranordnung einen durch den wenigstens einen Schweißbereich zu überdeckenden Schweißbereich-Minimumindikator und einen durch den wenigstens einen Schweißbereich nicht zu überdeckenden Schweißbereich-Maximumindikator umfasst.

Das Vorsehen einer derartigen Schweißindikatoranordnung gibt die Möglichkeit, nach dem Erzeugen eines Schweißbereichs durch visuelle Überprüfung, gegebenenfalls auch durch ein optisches Überprüfungssystem, festzustellen, ob der Schweißbereich das Schweißbauteil in ausreichendem Ausmaß erfasst. Überdeckt ein derartiger Schweißbereich den Schweißbereich-Minimumindikator bei nicht überdecktem Schweißbereich-Maximumindikator, bedeutet dies, dass der Schweißbereich korrekt dimensioniert ist. Überdeckt der Schweißbereich den Schweißbereich-Minimumindikator nicht oder überdeckt der Schweißbereich auch den Schweißbereich Maximumindikator, zeigt dies an, dass der Schweißbereich zu klein bzw. zu groß dimensioniert ist und gegebenenfalls nachgearbeitet werden muss.

Für eine gute visuelle Wahrnehmbarkeit kann der Schweißbereich-Minimumindikator eine Konturänderung des Schweißbauteils umfassen. Auch der Schweißbereich-Maximumindikator kann eine Konturänderung des Schweißbauteils umfassen.

Eine derartige Konturänderung kann beispielsweise dadurch bereitgestellt sein, dass die wenigstens eine Schweißindikatoranordnung wenigstens einen Einsenkungsbereich bezüglich einer Außenkontur des Schweißbauteils umfasst.

Beispielsweise kann der Schweißbereich-Minimumindikator einen Übergang von der Außenkontur zu dem Einsenkungsbereich umfassen, und der Schweißbereich-Maximumindikator kann einen Übergang von dem Einsenkungsbereich zu der Außenkontur umfassen.

Bei einer alternativen Ausgestaltungsform kann wenigstens eine Schweißindikatoranordnung zwei in Abstand zueinander angeordnete Einsenkungsbereiche bezüglich der Außenkontur des Schweißbauteils umfassen.

Insbesondere bei einem in Richtung einer Schweißbauteil-Längsachse ausgedehnten bzw. sich erstreckenden Schweißbauteil kann die Außenkontur eine Außenumfangskontur des Schweißbauteils bezüglich einer Schweißbauteil-Längsachse sein, und der wenigstens eine Einsenkungsbereich kann eine bezüglich der Schweißbauteil-Längsachse vorzugsweise vollständig umlaufende nutartige Einsenkung umfassen.

Bei einer alternativen Ausgestaltungsart eines Schweißbauteils kann eine gute visuelle Wahrnehmbarkeit der Qualität bzw. der Dimensionierung eines Schweißbereichs dadurch erreicht werden, dass die Schweißindikatoranordnung einen Übergangsbereich zwischen einem ersten Außenkonturbereich und einem bezüglich des ersten Außenkonturbereichs versetzten zweiten Außenkonturbereich umfasst, und dass der Schweißbereich-Minimumindikator einen Übergang von dem ersten Außenkonturbereich zu dem Übergangsbereich umfasst und der Schweißbereich-Maximumindikator einen Übergang von dem Übergangsbereich zu dem zweiten Außenkonturbereich umfasst.

Hierzu kann der erste Außenkonturbereich ein erster Außenumfangskonturbereich des Schweißbauteils bezüglich einer Schweißbauteil-Längsachse sein, und der zweite Außenkonturbereich kann ein zweiter Außenumfangskonturbereich des Schweißbauteils bezüglich der Schweißbauteil-Längsachse sein. Im ersten Außenkonturbereich weist bei derartiger Ausgestaltung das Schweißbauteil eine andere Radialabmessung bezüglich der Schweißbauteil-Längsachse auf als im zweiten Außenkonturbereich, so dass im Übergangsbereich ein Übergang von der Radialabmessung im ersten Außenkonturbereich zur Radialabmessung im zweiten Außenkonturbereich vorgesehen ist.

Beispielsweise kann der Übergangsbereich im Wesentlichen kegelstumpfartig ausgebildet sein.

Für eine definierte Positionierung eines Schweißbauteils bezüglich eines damit durch Verschweißen zu verbindenden Bauteils wird vorgeschlagen, dass an dem Schweißbauteil ein Abstützbereich zur Abstützung an einem mit dem Schweißbauteil zu verschweißenden Bauteil vorgesehen ist, und dass der Schweißbereich-Minimumindikator einen geringeren Abstand zu dem Abstützbereich aufweist als der Schweißbereich-Maxim umindikator.

Insbesondere beim Einsatz in einer Abgasanlage einer Brennkraftmaschine kann das Schweißbauteil ein Stutzen, vorzugsweise Sensoraufnahmestutzen, mit einer Aufnahmeöffnung sein, wobei an dem Stutzen eine Bauteil-Abstützfläche zur Abstützung des Stutzens an einem mit dem Stutzen zu verschweißenden Bauteil vorgesehen ist. An einem Außenumfangsbereich des Stutzens kann dann die wenigstens eine Schweißindikatoranordnung vorgesehen sein.

Gemäß einem weiteren Aspekt wird die eingangs angegebene Aufgabe gelöst durch ein Verfahren zum Verschweißen wenigstens eines Schweißbauteils nach einem der vor vorangehenden Ansprüche mit einem Bauteil, umfassend die Maßnahmen:
a) Anordnen des wenigstens einen Schweißbauteils bezüglich des Bauteils in einer Schweiß-Relativpositionierung,
b) Erzeugen wenigstens eines Schweißbereichs zum Fixieren des Schweißbauteils an dem Bauteil derart, dass der Schweißbereich-Minimumindikator wenigstens einer Schweißindikatoranordnung durch wenigstens einen Schweißbereich überdeckt ist und der Schweißbereich-Maximumindikator dieser Schweißindikatoranordnung durch diesen Schweißbereich nicht überdeckt ist.

Bei diesem Verfahren kann eine definierte Positionierung der miteinander zu verschweißenden Komponenten Schweißbauteil und Bauteil dadurch erreicht werden, dass bei der Maßnahme a) zum Erreichen der Schweiß-Relativpositionierung das Schweißbauteil mit dem Abstützbereich in Anlage an dem Bauteil positioniert wird.

Bei Einsatz eines Stutzens als Schweißbauteil kann bei der Maßnahme a) der Stutzen mit der Bauteil-Abstützfläche in Anlage an dem Bauteil positioniert werden, und der bei der Maßnahme b) erzeugte wenigstens eine Schweißbereich kann eine um den Stutzen vorzugsweise vollständig umlaufende Schweißnaht umfassen.

Die Erfindung betrifft ferner eine Abgasanlage für eine Brennkraftmaschine, umfassend wenigstens einen vermittels eines erfindungsgemäßen Verfahrens an einer ein Bauteil bereitstellenden Abgasführungskomponente festgelegten, ein erfindungsgemäßes Schweißbauteil bereitstellenden Stutzen.

Die vorliegende Erfindung wird nachfolgend mit Bezug auf die beiliegenden Figuren detailliert beschrieben. Es zeigt:
- Fig. 1: eine Längsschnittansicht eines ein Schweißbauteil bereitstellenden Stutzens;
- Fig. 2: das Detail II in Figur 1 vergrößert;
- Fig. 3: eine der Fig. 1 entsprechende Längsschnittansicht einer alternativen Ausgestaltungsart eines ein Schweißbauteil bereitstellenden Stutzens;
- Fig.4: das Detail IV in Fig. 3 vergrößert;
- Fig. 5: in den Darstellungen a) und b) vergrößert verschiedene Ausgestaltungen von Schweißindikatoranordnungen;
- Fig. 6: einen Abschnitt einer Abgasanlage mit einem ein Schweißbauteil bereitstellenden Stutzen.

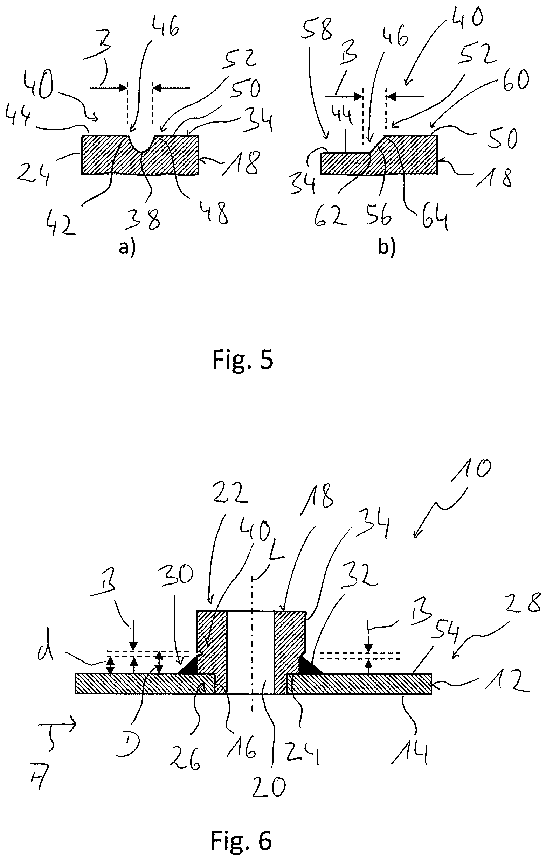

Bevor nachfolgend auf Details der vorliegenden Erfindung eingegangen wird, wird mit Bezug auf die Fig. 6 der Kontext erläutert, in welchem die Erfindung Anwendung finden kann.

Die Fig. 6 zeigt einen Abschnitt einer allgemein mit 10 bezeichneten Abgasanlage einer Brennkraftmaschine beispielsweise in einem Fahrzeug. Die Abgasanlage 10 umfasst eine beispielsweise als Rohr oder Gehäuse ausgebildete Abgasführungskomponente 12, in deren Innenraum Abgas A beispielsweise zu oder von einer Abgasbehandlungseinheit, wie z. B. Katalysator, Partikelfilter oder dgl., strömt.

In einer Wandung 14 der Abgasführungskomponente 12 ist eine Öffnung 16 ausgebildet, in deren Bereich an der Wandung 14 ein beispielsweise zur Aufnahme eines Sensors ausgebildeter Stutzen 18 festgelegt ist. Im Stutzen 18 ist eine Aufnahmeöffnung 20 ausgebildet, durch welche hindurch ein am Stutzen 18 festzulegender Sensor in Wechselwirkung mit dem Abgas A treten kann.

Der im Sinne der vorliegenden Erfindung ein mit Metallmaterial aufgebautes Schweißbauteil 22 bereitstellende Stutzen 18 ist in Richtung einer Schweißbauteil-Längsachse L langgestreckt bzw. zu dieser im Wesentlichen rotationssymmetrisch ausgebildet und stellt mit einer Bauteil-Abstützfläche 24 einen Abstützbereich 26 bereit, mit welchem der Stutzen 18 an der im Sinne der vorliegenden Erfindung als mit Metallmaterial aufgebautes Bauteil 28 zu betrachtenden Abgasführungskomponente 12 in einer Schweiß-Relativpositionierung positioniert werden kann. Das Festlegen des Stutzens 18 an der Abgasführungskomponente 12 erfolgt durch eine um die Schweißbauteil-Längsachse L vorzugsweise vollständig umlaufende und einen Schweißbereich 30 bereitstellende Schweißnaht 32. Somit wird ein stabiler und gleichzeitig auch gasdichter Verbund des Stutzens 18 bzw. des Schweißbauteils 22 mit der Abgasführungskomponente 12 bzw. dem Bauteil 28 erlangt.

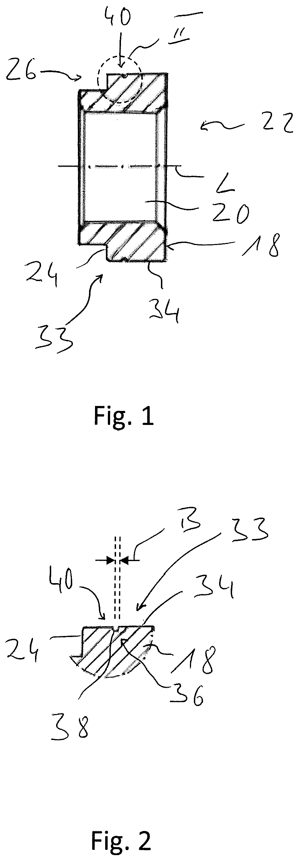

Eine erste Ausgestaltungsform eines derartigen Stutzens 18 ist in den Fig. 1, 2, 5a und in der linken Hälfte der Fig. 6 veranschaulicht. In dieser Ausgestaltungsform ist in axialem Abstand zu der Bauteil-Abstützfläche 24 an einer eine Außenkontur 33 bereitstellenden bzw. definierenden, im Wesentlichen zylindrischen Außenumfangsfläche 34 des Stutzens 18 ein Einsenkungsbereich 36 mit einer in Umfangsrichtung um die Schweißbauteil-Längsachse L vorzugsweise vollständig umlaufenden nutartigen Einsenkung 38 vorgesehen. Der Einsenkungsbereich 36 bzw. die nutartige Einsenkung 38 weist in Richtung der Schweißbauteil-Längsachse L eine Breite B auf und stellt allgemein eine Schweißindikatoranordnung 40 bereit. Ein Übergang 42 von der nutartigen Einsenkung 38 zu einem zwischen der nutartigen Einsenkung 38 und der Bauteil-Abstützfläche 24 liegenden Teil 44 der Außenumfangsfläche 34 bildet einen Schweißbereich-Minimumindikator 46 der Schweißindikatoranordnung 40, und ein Übergang 48 von der nutartigen Einsenkung 38 zu einem Teil 50 der Außenumfangsfläche 34, welcher von der Bauteil-Abstützfläche 24 weiter entfernt liegt, bildet einen Schweißbereich-Maximumindikator 52.

Der axiale Abstand zwischen dem Schweißbereich-Minimumindikator 46 und dem Schweißbereich-Maximumindikator 52 entspricht der Breite B der nutartigen Einsenkung 38. Bei an dem Bauteil 28 bzw. der Abgasführungskomponente 12 in der für die Verschweißung vorgesehenen Schweiß-Relativpositionierung, welche in Fig. 6 dargestellt ist, weist der Schweißbereich-Minimumindikator 46 zu der der Abstützung des Schweißbauteils 22 bzw. des Stutzens 18 dienenden Außenoberfläche 54 des Bauteils 28 bzw. der Abgasführungskomponente 12 einen Abstand d auf, welcher um die Breite B kleiner ist als ein Abstand D zwischen dem Schweißbereich-Maximumindikator 52 und der Außenoberfläche 54.

Nach dem Positionieren des Stutzens 18 an der Abgasführungskomponente 12 in der Schweiß-Relativpositionierung gemäß Fig. 6 wird die Schweißnaht 32 im Übergangsbereich von der Außenumfangsfläche 34 des Stutzens 18 zur Außenoberfläche 54 der Abgasführungskomponente 12 derart erzeugt, dass diese in Richtung der Schweißbauteil-Längsachse L sich an der Außenumfangsfläche 34 bis in den Bereich der Schweißindikatoranordnung 40 erstreckt. Dies bedeutet, dass die Schweißnaht 32 so erzeugt wird, dass diese den Teil 44 der Außenumfangsfläche 34 bis in den Bereich des Schweißbereich-Minimumindikators 46 bzw. über den Schweißbereich-Minimumindikator 46 hinaus überdeckt, so dass der Schweißbereich-Minimumindikator 46, also der Übergang 42 zwischen der nutartigen Einsenkung 38 und dem Teil 44 der Außenumfangsfläche 34, nicht mehr zu sehen ist. Die Schweißnaht 32 erstreckt sich jedoch nicht so weit, dass sie die vollständige nutartige Einsenkung 38 bis zum Schweißbereich-Maximumindikator 52, also dem Übergang 48 zum Teil 50 der Außenumfangsfläche 34 des Stutzens 18, überdeckt.

Bei derartiger Ausdehnung der Schweißnaht 32 entlang der Schweißbauteil-Längsachse L ist diese korrekt dimensioniert bzw. positioniert. Dies kann in einer visuellen Überprüfung, beispielsweise vermittels entsprechender optischer Systeme, verifiziert werden. Wird festgestellt, dass der Schweißbereich-Minimumindikator 46 von der Schweißnaht 32 überdeckt ist, während der Schweißbereich-Maximumindikator 52 noch erkennbar ist, wird der so hergestellte Verbund als korrekt beurteilt. Wird festgestellt, dass beispielsweise die Schweißnaht 32 den Schweißbereich-Minimumindikator 46 nicht überdeckt, dieser also bei optischer Untersuchung noch erkennbar ist, wird beurteilt, dass die Schweißnaht 32 nicht korrekt dimensioniert ist. Wird festgestellt, dass nicht nur der Schweißbereich-Minimumindikator 46, sondern auch der Schweißbereich-Maximumindikator 52 überdeckt ist und somit bei einer optischen Untersuchung nicht erkannt werden kann, wird die Schweißnaht 32 bzw. der Schweißbereich 30 gleichermaßen als nicht korrekt ausgeführt beurteilt. In den Fällen, in welchen der Schweißbereich 32 als nicht korrekt ausgeführt beurteilt wird, kann in einem nachfolgenden Arbeitsschritt untersucht werden, ob bzw. in welchem Umfang eine Korrektur durchgeführt werden kann oder muss, um ggf. eine Überarbeitung des Schweißbereichs 30 vorzunehmen, oder, sofern dies nicht möglich ist, den so hergestellten Verbund auszusortieren und der weiteren Bearbeitung nicht mehr zuzuführen.

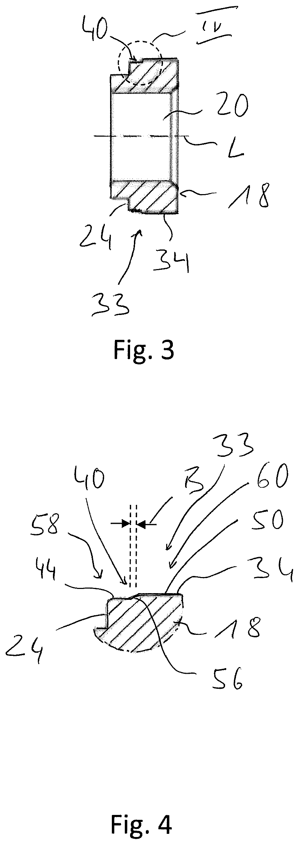

Eine alternative Ausgestaltung ist in den Fig. 3, 4, 5b und in der rechten Hälfte der Fig. 6 veranschaulicht. In dieser Ausgestaltungsart umfasst die Schweißindikatoranordnung 40 einen Übergangsbereich 56 zwischen den Teilen 44 und 50 der Außenumfangsfläche 34 des Stutzens 18. Auch dieser Übergangsbereich 56 kann in Richtung der Schweißbauteil-Längsachse L die Breite B aufweisen. Der Übergang 56 weist beispielsweise eine kegelstumpfartige Struktur auf, so dass der Teil 44 der Außenumfangsfläche 34, welche bei dieser Ausgestaltung einen ersten Außenkonturbereich 58 bereitstellt, einen kleineren Radialabstand zur Schweißbauteil-Längsachse L aufweist, als der einen zweiten Außenkonturbereich 60 bereitstellende Teil 50 der Außenumfangsfläche 34. Ein Übergang 62 von dem Teil 44 bzw. dem ersten Außenkonturbereich 58 zum Übergangsbereich 56 stellt bei dieser Ausgestaltung den Schweißbereich-Minimumindikator 46 bereit. Ein Übergang 64 vom Übergangsbereich 56 zu dem den zweiten Außenkonturbereich 60 bereitstellenden Teil 50 der Außenumfangsfläche 34 stellt den Schweißbereich-Maximumindikator 52 bereit.

Bei Positionierung des Stutzens 18 an der Abgasführungskomponente 12 in der in Fig. 6 erkennbaren Schweiß-Relativpositionierung wird die Schweißnaht 32 so gebildet, dass sie sich entlang der Schweißbauteil-Längsachse L bis in den axialen Ausdehnungsbereich des Übergangsbereichs 56 erstreckt, so dass zwar der Übergang 62 überdeckt ist, nicht jedoch der Übergang 64. Nur dann wird die Schweißnaht 32 als korrekt ausgeführt beurteilt. Andernfalls wird die Schweißnaht 32 als nicht korrekt ausgeführt beurteilt und es wird entschieden, ob bzw. in welchem Ausmaß bzw. in welcher Art Korrekturen vorgenommen werden.

Durch die vorliegende Erfindung wird es möglich, mit einfachen baulichen Maßnahmen die Möglichkeit zu schaffen, eine Überprüfung eines Schweißbereichs dahingehend vorzunehmen, ob dieser korrekt dimensioniert ist bzw. an der korrekten Stelle ausgeführt ist. Es ist darauf hinzuweisen, dass an beiden miteinander durch Verschweißen zu verbindenden Komponenten, also sowohl an dem Schweißbauteil als auch dem damit zu verschweißenden Bauteil, derartige Schweißindikatoranordnungen vorgesehen sein können. Im dargestellten Beispiel könnten beispielsweise an der Wandung 14 der Abgasführungskomponente 12 an deren Außenoberfläche 54 in Abstand zur Öffnung 16 Einkerbungen bzw. nutartige Einsenkungen, beispielsweise als konzentrische Ringe, gebildet sein, um mit jeweiligen Übergängen zur Außenoberfläche 54 einen Schweißbereich-Minimumindikator und einen Schweißbereich-Maximumindikator bereitzustellen. Gleichermaßen könnten beispielsweise dann, wenn die in Fig. 6 erkennbare Schweißnaht 32 in Umfangsrichtung nur bereichsweise ausgeführt sein soll, auch an verschiedenen Umfangspositionen des Stutzens 18 an dessen Außenumfangsfläche 34 ein Schweißbereich-Minimumindikator und ein Schweißbereich-Maximumindikator, beispielsweise durch eine in Richtung der Schweißbauteil-Längsachse L sich erstreckende nutartige Einsenkung in der Außenumfangsfläche 34, vorgesehen sein.

Bei einer alternativen Ausgestaltung einer Schweißindikatoranordnung könnte diese in Abstand zueinander zwei Einsenkungsbereiche bzw. nutartige Einsenkungen aufweisen, wobei einer dieser Einsenkungsbereiche den Schweißbereich-Minimumindikator bildet und bei korrekter Verschweißung zumindest teilweise durch einen Schweißbereich überdeckt sein sollte, während der andere Einsenkungsbereich den Schweißbereich-Maximumindikator bereitstellt und bei korrekter Verschweißung nicht oder zumindest nicht vollständig durch einen Schweißbereich überdeckt sein sollte.

## Patentansprüche

1. Schweißbauteil zum Verschweißen mit einem Bauteil vermittels wenigstens eines Schweißbereichs, wobei an dem Schweißbauteil (22) wenigstens eine Schweißindikatoranordnung (40) vorgesehen ist, wobei die wenigstens eine Schweißindikatoranordnung (40) einen durch den wenigstens einen Schweißbereich (30) zu überdeckenden Schweißbereich-Minimumindikator (46) und einen durch den wenigstens einen Schweißbereich (30) nicht zu überdeckenden Schweißbereich-Maximumindikator (52) umfasst.

2. Schweißbauteil nach Anspruch 1, **dadurch gekennzeichnet, dass** der Schweißbereich-Minimumindikator (46) eine Konturänderung des Schweißbauteils (22) umfasst, oder/und dass der Schweißbereich-Maximumindikator (52) eine Konturänderung des Schweißbauteils (22) umfasst.

3. Schweißbauteil nach Anspruch 2, **dadurch gekennzeichnet, dass** die wenigstens eine Schweißindikatoranordnung (40) wenigstens einen Einsenkungsbereich (36) bezüglich einer Außenkontur (33) des Schweißbauteils (22) umfasst.

4. Schweißbauteil nach Anspruch 3, **dadurch gekennzeichnet, dass** der Schweißbereich-Minimumindikator (46) einen Übergang (42) von der Außenkontur (33) zu dem Einsenkungsbereich (36) umfasst und der Schweißbereich-Maximumindikator (52) einen Übergang von dem Einsenkungsbereich (36) zu der Außenkontur (33) umfasst.

5. Schweißbauteil nach Anspruch 3, **dadurch gekennzeichnet, dass** wenigstens eine Schweißindikatoranordnung (40) zwei in Abstand zueinander angeordnete Einsenkungsbereiche (36) bezüglich der Außenkontur des Schweißbauteils (22) umfasst.

6. Schweißbauteil nach Anspruch 4 oder 5, **dadurch gekennzeichnet, dass** die Außenkontur eine Außenumfangskontur des Schweißbauteils (22) bezüglich einer Schweißbauteil-Längsachse (L) ist, und dass der wenigstens eine Einsenkungsbereich (36) eine bezüglich der Schweißbauteil-Längsachse (L) vorzugsweise vollständig umlaufende nutartige Einsenkung (38) umfasst.

7. Schweißbauteil nach Anspruch 2, **dadurch gekennzeichnet, dass** die Schweißindikatoranordnung (40) einen Übergangsbereich (56) zwischen einem ersten Außenkonturbereich (58) und einem bezüglich des ersten Außenkonturbereichs (58) versetzten zweiten Außenkonturbereich (60) umfasst, und dass der Schweißbereich-Minimumindikator (46) einen Übergang (62) von dem ersten Außenkonturbereich (58) zu dem Übergangsbereich (56) umfasst und der Schweißbereich-Maximumindikator (52) einen Übergang (64) von dem Übergangsbereich (56) zu dem zweiten Außenkonturbereich (60) umfasst.

8. Schweißbauteil nach Anspruch 7, **dadurch gekennzeichnet, dass** der erste Außenkonturbereich (58) ein erster Außenumfangskonturbereich des Schweißbauteils (22) bezüglich einer Schweißbauteil-Längsachse (L) ist, dass der zweite Außenkonturbereich (60) ein zweiter Außenumfangskonturbereich des Schweißbauteils (22) bezüglich der Schweißbauteil-Längsachse (L) ist, wobei im ersten Außenkonturbereich (58) das Schweißbauteil (22) eine andere Radialabmessung bezüglich der Schweißbauteil-Längsachse (L) aufweist als im zweiten Außenkonturbereich (60), und dass im Übergangsbereich (56) ein Übergang von der Radialabmessung im ersten Außenkonturbereich (58) zur Radialabmessung im zweiten Außenkonturbereich (60) (56) vorgesehen ist.

9. Schweißbauteil nach Anspruch 8, **dadurch gekennzeichnet, dass** der Übergangsbereich im Wesentlichen kegelstumpfartig ausgebildet ist.

10. Schweißbauteil nach einem der vorangehenden Ansprüche, **dadurch gekennzeichnet, dass** ein Abstützbereich (26) zur Abstützung an einem mit dem Schweißbauteil (22) zu verschweißenden Bauteil (28) vorgesehen ist, und dass der Schweißbereich-Minimumindikator (46) einen geringeren Abstand (d) zu dem Abstützbereich (26) aufweist als der Schweißbereich-Maximumindikator (52).

11. Schweißbauteil nach einem der vorangehenden Ansprüche, **dadurch gekennzeichnet, dass** das Schweißbauteil (22) ein Stutzen (18), vorzugsweise Sensoraufnahmestutzen für eine Abgasanlage (10) einer Brennkraftmaschine, mit einer Aufnahmeöffnung (20) ist, wobei an dem Stutzen (18) eine Bauteil-Abstützfläche (24) zur Abstützung des Stutzens (18) an einem mit dem Stutzen (18) zu verschweißenden Bauteil (28) vorgesehen ist, und dass an einem Außenumfangsbereich des Stutzens (18) die wenigstens eine Schweißindikatoranordnung (40) vorgesehen ist.

12. Verfahren zum Verschweißen wenigstens eines Schweißbauteils (22) nach einem der vor vorangehenden Ansprüche mit einem Bauteil (28), umfassend die Maßnahmen:
a) Anordnen des wenigstens einen Schweißbauteils (22) bezüglich des Bauteils (28) in einer Schweiß-Relativpositionierung,
b) Erzeugen wenigstens eines Schweißbereichs (30) zum Fixieren des Schweißbauteils (22) an dem Bauteil (28) derart, dass der Schweißbereich-Minimumindikator (46) wenigstens einer Schweißindikatoranordnung (40) durch wenigstens einen Schweißbereich (30) überdeckt ist und der Schweißbereich-Maximumindikator (52) dieser Schweißindikatoranordnung (40) durch diesen Schweißbereich (30) nicht überdeckt ist.

13. Verfahren nach Anspruch 12, sofern auf Anspruch 10 rückbezogen, **dadurch gekennzeichnet, dass** bei der Maßnahme a) zum Erreichen der Schweiß-Relativpositionierung das Schweißbauteil (22) mit dem Abstützbereich (26) in Anlage an dem Bauteil (28) positioniert wird.

14. Verfahren nach Anspruch 13, sofern auf Anspruch 11 rückbezogen, **dadurch gekennzeichnet, dass** bei der Maßnahme a) der Stutzen (18) mit der Bauteil-Abstützfläche (24) in Anlage an dem Bauteil (28) positioniert wird, und dass der bei der Maßnahme b) erzeugte wenigstens eine Schweißbereich (30) eine um den Stutzen (18) vorzugsweise vollständig umlaufende Schweißnaht (32) umfasst.

15. Abgasanlage für eine Brennkraftmaschine, umfassend wenigstens einen vermittels eines Verfahrens nach einem der Ansprüche 12-14 an einer ein Bauteil (28) bereitstellenden Abgasführungskomponente (12) festgelegten, ein Schweißbauteil (22) bereitstellenden Stutzen (18) nach Anspruch 11.
